(19) Europäisches Patentamt
European Patent Office
Office européen des brevets

(11) **EP 2 497 598 A1**

(12) **EUROPEAN PATENT APPLICATION**
published in accordance with Art. 153(4) EPC

(43) Date of publication:
**12.09.2012 Bulletin 2012/37**

(51) Int Cl.:
***B23Q 1/72*** *(2006.01)*     ***B23Q 1/01*** *(2006.01)*

(21) Application number: **10828157.7**

(22) Date of filing: **24.09.2010**

(86) International application number:
**PCT/JP2010/066477**

(87) International publication number:
**WO 2011/055597 (12.05.2011 Gazette 2011/19)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **06.11.2009 JP 2009254531**

(71) Applicant: **Mitsubishi Heavy Industries, Ltd.**
**Tokyo 108-8215 (JP)**

(72) Inventors:
• **HASEGAWA, Tomoharu**
**Tokyo 108-8215 (JP)**
• **TAUCHI, Hiroyuki**
**Tokyo 108-8215 (JP)**

(74) Representative: **Henkel, Breuer & Partner**
**Patentanwälte**
**Maximiliansplatz 21**
**80333 München (DE)**

(54) **RAM DEFLECTION CORRECTION DEVICE AND CORRECTION METHOD**

(57) Provided are a ram deflection correction device and a correction method which are capable of simultaneously correcting the displacement and the inclination of a ram tip. For this purpose, the ram deflection correction device, which corrects the deflection of a ram (15) of a machine tool supported by a saddle in such a way as to be movable in a horizontal direction (H), comprises a first tension bar (21) which is installed along the horizontal direction (H) and above the centerline (L) of the ram (15) and which provides a tensile force (F1) that pulls the tip of the ram (15) inward, and a second tension bar (22) which is installed along the horizontal direction (H) and above the centerline (L) of the ram (15) and which provides a tensile force (F2) that pulls inward at a position located inward of the tip of the first tension bar (21).

Fig.2

## Description

## TECHNICAL FIELD

The present invention relates to a ram deflection correction device and a ram deflection correction method used in a horizontal machine tool and the like.

## BACKGROUND ART

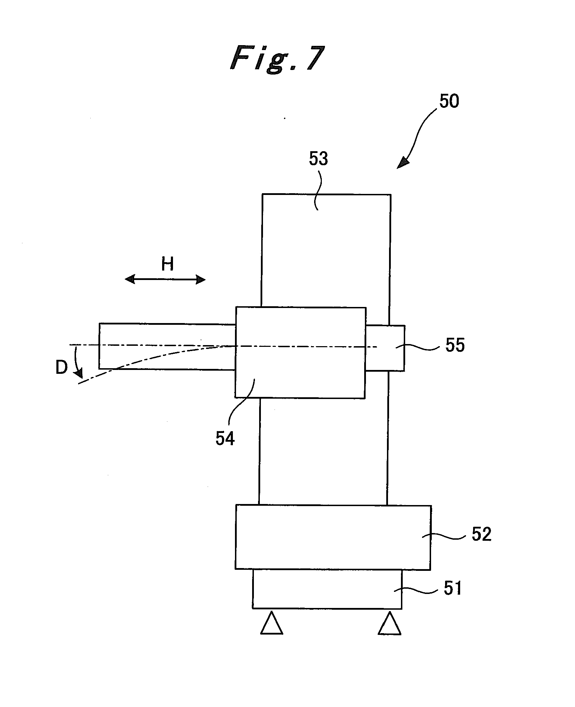

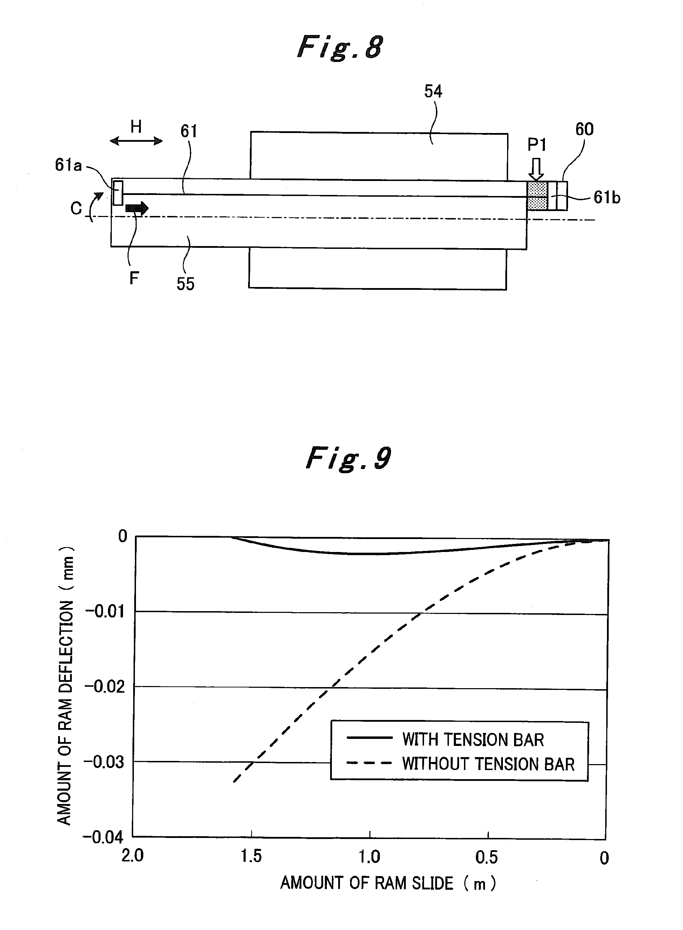

Fig. 7 shows a schematic of a conventional horizontal machine tool. In a horizontal machine tool 50, a column base 52 is provided on a bed 51 movably in a horizontal direction (referred to as a front-rear direction for convenience), and a column 53 stands on the column base 52. A saddle 54 is supported on one of the side surfaces of the column 53 movably in the vertical direction (referred to as a top-bottom direction for convenience), and a ram 55 is supported on the saddle 54 movably in a horizontal direction (referred to as a left-right direction H for convenience). The ram 55 includes a spindle, and a machining target workpiece is machined using a tool attached to the front end of the spindle. In machining, the column base 52, the saddle 54, and the ram 55 are moved to perform a desired machining. In this process, the ram 55 experiences deflection D (see a graph of a dotted line in Fig. 9 described later) along with its movement in the left-right direction H, thus causing a problem of deteriorating the perpendicularity to the machined surface.

There already exists a technique for solving the problem mentioned above, in which a tension bar 61 is provided inside the ram 55 and used to pull in the front end of the ram 55 to correct the deflection (Patent Document 1) as shown in Fig. 8. To specifically describe this with reference to Fig. 8, the tension bar 61 is provided inside the ram 55 in the longitudinal direction thereof, or in the left-right direction H. A pulling portion 61a for applying a pulling force F to the ram 55 is provided at a front end side of the ram 55, and a piston 61b and a cylinder portion 60 are provided at a rear end side of the ram 55. When the cylinder portion 60 is supplied with a pressure P1 which is changed based on the amount of ram slide, the piston 61b is moved toward the rear end side. Along with the movement of the piston 61b, the tension bar 61 and the pulling portion 61a are moved toward the rear end side and thus pull in the front end side of the ram 55 with the pulling force F. As a result, the front end of the ram 55 is shifted in a direction C, correcting the deflection of the ram 55.

Fig. 9 shows graphs comparing cases with and without a tension bar regarding the relation between the amount of ram slide and the amount of ram deflection. As shown in the graphs in Fig. 9, using a tension bar as shown in Fig. 8 allows correction of displacement of the front end of the ram. Patent Document 1: Japanese Examined Patent Application Publication No. Hei 03-064264

## DISCLOSURE OF THE INVENTION

## PROBLEM TO BE SOLVED BY THE INVENTION

While a conventional tension bar as shown in Fig. 8 can correct the displacement of the front end of the ram, the correction results in inclination of the front end of the ram as can be seen from Fig. 9. The inclination of the front end of the ram varies depending upon the load (the presence or absence of an attachment and the type thereof) applied to the front end of the ram. If the displacement of the front end of the ram is corrected with priority, the inclination of the front end of the ram becomes large and inclines the spindle, thereby causing a problem that a step is formed at a joining portion in the machined surface. Meanwhile, in a conventional tension bar as shown in Fig. 8, the inclination of the front end of the ram can be corrected with priority over the displacement of the front end of the ram. In that case, however, the displacement of the front end of the ram cannot be corrected completely, hence causing a problem of deteriorating the position accuracy. As described, the conventional tension bar cannot simultaneously correct the displacement and inclination of the front end of the ram and therefore has had a problem in the perpendicularity to the machined surface and the position accuracy in machining.

The present invention has been made in view of the above-described problem, and an object thereof is to provide a ram deflection correction device and a ram deflection correction method capable of simultaneously correcting the displacement and inclination of the front end of a ram.

## MEANS FOR SOLVING THE PROBLEM

A ram deflection correction device according to a first invention for solving the above problem, the device being for correcting deflection of a ram of a machine tool, the ram being supported on a saddle movably in a horizontal direction, comprises:

a first tension bar provided along the horizontal direction above a center line of the ram and configured to apply a first pulling force which inwardly pulls a front end of the ram; and
a second tension bar provided along the horizontal direction above the center line of the ram and configured to apply a second pulling force which inwardly pulls a position inward of a front end of the first tension bar.

A ram deflection correction device according to a second invention for solving the above problem is that wherein

in the ram deflection correction device according to the first invention,
the first tension bar and the second tension bar are disposed at positions apart from and above a flexural center of the ram.

A ram deflection correction device according to a third invention for solving the above problem is that wherein

in the ram deflection correction device according to the first invention or the second invention,

the first tension bar and the second tension bar are disposed coaxially with each other.

A ram deflection correction device according to a fourth invention for solving the above problem, the device being for correcting deflection of a ram of a machine tool, the ram being supported on a saddle movably in a horizontal direction, comprises:

a first compression bar provided along the horizontal direction below a center line of the ram and configured to apply a first pushing force which outwardly pushes a front end of the ram; and

a second compression bar provided along the horizontal direction below the center line of the ram and configured to apply a second pushing force which outwardly pushes a position inward of a front end of the first tension bar.

A ram deflection correction device according to a fifth invention for solving the above problem is that wherein

in the ram deflection correction device according to the fourth invention,

the first compression bar and the second compression bar are disposed at positions apart from and below a flexural center of the ram.

A ram deflection correction device according to a sixth invention for solving the above problem is that wherein

in the ram deflection correction device according to the fourth invention or the fifth invention,

the first compression bar and the second compression bar are disposed coaxially with each other.

A ram deflection correction method according to a seventh invention for solving the above problem is a ram deflection correction method using the ram deflection correction device according to any one of the inventions 1 to 3, and comprises:

finding the first pulling force and the second pulling force which cause an amount of displacement of the front end of the ram to be 0 and also cause a sum of a bending moment of the ram generated by an own weight of the ram and a bending moment generated by the first pulling force and the second pulling force to be 0 at the front end of the ram; and applying the first pulling force and the second pulling force thus found through the first tension bar and the second tension bar, respectively.

A ram deflection correction method according to an eighth invention for solving the above problem is a ram deflection correction method using the ram deflection correction device according to any one of the inventions 4 to 6, and comprises:

finding the first pushing force and the second pushing force which cause an amount of displacement of the front end of the ram to be 0 and also cause a sum of a bending moment of the ram generated by an own weight of the ram and a bending moment generated by the first pushing force and the second pushing force to be 0 at the front end of the ram; and applying the first pushing force and the second pushing force thus found through the first compression bar and the second compression bar, respectively.

A ram deflection correction method according to a ninth invention for solving the above problem is that wherein

in the ram deflection correction method according to the seventh invention or the eight invention,

in a case where an attachment is mounted to the front end of the ram, a weight of the attachment is added to the weight of the ram, and then the bending moment of the ram is found.

EFFECT OF THE INVENTION

According to the present invention, not only the displacement of the front end of the ram but also the inclination of the front end of the ram can be corrected simultaneously, and the straightness and perpendicularity of the ram can therefore be improved. Moreover, since the displacement and inclination of the front end of the ram can be corrected simultaneously, variations in the displacement and inclination of the front end of the ram caused by attachments differing in mass can be reduced. Accordingly, a high machining accuracy can be achieved regardless of what type of attachment is used.

BRIEF DESCRIPTION OF THE DRAWINGS

[Fig. 1] Fig. 1 is a schematic view showing a horizontal machine tool including a ram deflection correction device according to the present invention.
[Fig. 2] Fig. 2 is a view describing the ram deflection correction device according to the present invention.
[Fig. 3] Fig. 3 is a cross-sectional view of the ram deflection correction device according to the present invention.
[Fig. 4] Fig. 4 is a set of bending moment diagrams describing the principle of ram deflection correction according to the present invention. Part (a) shows a single-stage tension bar, and Part (b) shows a two-stage tension bar.
[Fig. 5] Fig. 5 is a flowchart showing a ram deflection correction method according to the present invention.

[Fig. 6] Fig. 6 is a set of graphs showing an effect of the present invention regarding the relationship between the amount of ram slide and the amount of ram deflection.

[Fig. 7] Fig. 7 is a schematic view showing a conventional horizontal machine tool.

[Fig. 8] Fig. 8 is a view describing a conventional tension bar.

[Fig. 9] Fig. 9 is a set of graphs comparing cases with and without a tension bar regarding the relationship between the amount of ram slide and the amount of ram deflection.

EXPLANATION OF THE REFERENCE NUMERALS

    10 horizontal machine tool
    15 ram
    20 two-stage tension bar
    21 first tension bar
    22 second tension bar

BEST MODES FOR CARRYING OUT THE INVENTION

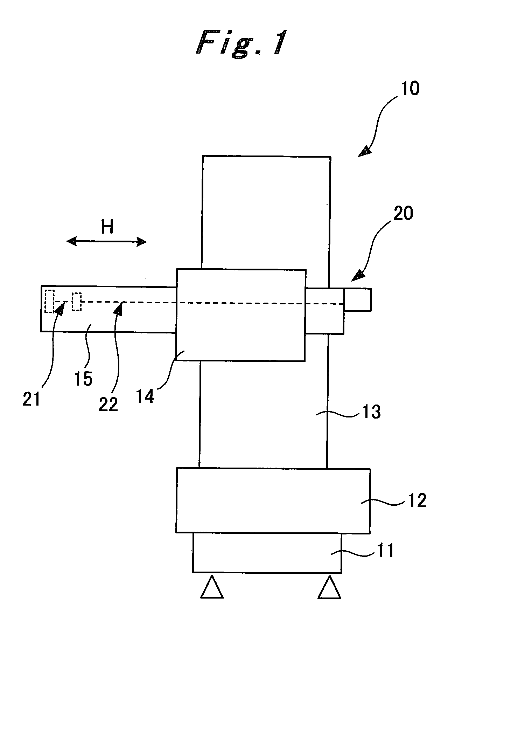

Hereinbelow, a ram deflection correction device and a ram deflection correction method according to the present invention will be described with reference to Figs. 1 to 6.

(Embodiment 1)

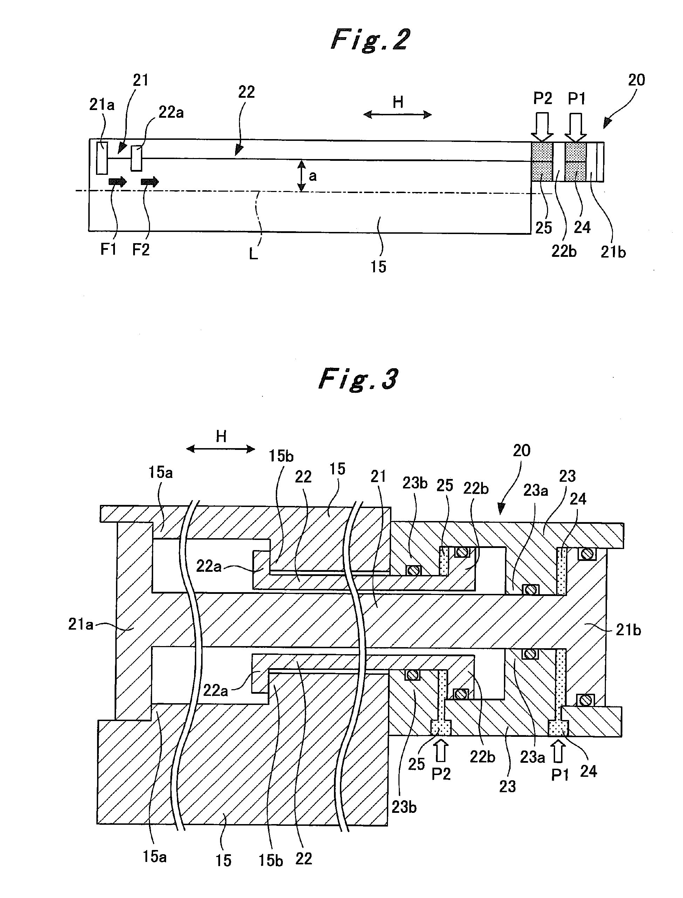

Fig. 1 is a schematic view showing a horizontal machine tool including a ram deflection correction device according to an embodiment. Fig. 2 is a view describing the ram deflection correction device. Fig. 3 is a cross-sectional view of the ram deflection correction device.

In a horizontal machine tool 10 shown in Fig. 1, a column base 12 is provided on a bed 11 movably in the front-rear direction, and a column 13 stands on the column base 12. A saddle 14 is supported on one of the side surfaces of the column 13 movably in the top-bottom direction, and a ram 15 is supported on the saddle 14 movably in the left-right direction H. The ram 15 includes a spindle, and a machining target workpiece is machined using a tool attached to the front end of the spindle. In machining, the column base 12, the saddle 14, and the ram 15 are moved in the front-rear direction, the top-bottom direction, and the left-right direction, respectively, to perform a desired machining.

As previously mentioned, the ram 15 has the problem that it experiences deflection along with its movement in the left-right direction H, which in turn deteriorates the perpendicularity to the machined surface. In this embodiment, however, the ram 15 is provided with a tension bar 20 of a two-stage type (hereinafter, referred to as a two-stage tension bar) including a first tension bar 21 and a second tension bar 22 to allow simultaneous correction of displacement of the front end of the ram 15 and inclination of the front end of the ram 15.

A specific configuration of the two-stage tension bar 20 in this embodiment will be described with reference to Figs. 2 and 3.

In this embodiment, the two-stage tension bar 20 includes the first tension bar 21 and the second tension bar 22 disposed coaxially with each other and is provided above a center line L of the ram 15. Moreover, a cylinder portion 23 for applying a pulling force F1 (first pulling force) and a pulling force F2 (second pulling force) to the first tension bar 21 and the second tension bar 22, respectively, is provided at a rear end side of the ram 15.

The first tension bar 21 is provided along the longitudinal direction of the ram 15 (left-right direction H) over substantially the entire length thereof. Specifically, the first tension bar 21 is such that a pulling portion 21a for applying the pulling force F1 to the ram 15 is provided at a front end side of the ram 15, that a piston 21b and a supporting portion 23a are provided in a cylinder portion 23 at the rear end side of the ram 15, and that an oil chamber 24 is formed between the piston 21b and the supporting portion 23a.

The second tension bar 22 is also provided along the longitudinal direction of the ram 15 (left-right direction H) but has a length shorter than the first tension bar 21. Moreover, the second tension bar 22 is disposed on a circumferentially outer side of the first tension bar 21 in such a way as to be coaxial with the first tension bar 21. In other words, a columnar first tension bar 21 is coaxially disposed inside a cylindrical second tension bar 22, i.e. a double-cylinder structure. Specifically, the second tension bar 22 is such that a pulling portion 22a for applying the pulling force F2 to the ram 15 is provided not at the front end side of the ram 15 but at a side inward of the position of the pulling portion 21a and a receiving portion 15a (a side closer to the rear end), that a piston 22b and a supporting portion 23b are provided in the cylinder portion 23 at the rear end side of the ram 15, and that an oil chamber 25 is formed between the piston 22b and the supporting portion 23b.

Thus, when the oil chamber 24 is supplied with a pressure P1, the piston 21b is moved toward the rear end side. Along with the movement of the piston 21b, the tension bar 21 and the pulling portion 21a are moved toward the rear end side and thus pull in the receiving portion 15a at the front end side of the ram 15 with the pulling force F1. Moreover, when the oil chamber 25 is supplied with a pressure P2, the piston 22b is moved toward the rear end side. Along with the movement of the piston 22b, the tension bar 22 and the pulling portion 22a are moved toward the rear end side and thus pull in a receiving portion 15b of the ram 15 with the pulling force F2. The pressures P1 and P2 to be supplied to the oil chambers 24 and 25 are controlled at desired pressures P1 and P2 by driving electromagnetic proportional control valves (unillustrated), for example, respectively.

Note that besides electromagnetic proportional control valves, other pressure changing units may be used if they can control the pressures P1 and P2 to be supplied to the oil chambers 24 and 25. Moreover, besides hydraulic pressures, drive forces of motors or the like may be used to generate the pulling forces F1 and F2 of the first tension bar 21 and second tension bar 22.

In the two-stage tension bar 20 in this embodiment, by pulling in the receiving portion 15a at the front end side of the ram 15 and the receiving portion 15b at a side inward of the receiving portion 15a (the side closer to the rear end) with the pulling force F1 and the pulling force F2, respectively, the front end side of the ram 15 (a portion around the receiving portion 15a) and the inner side of the front end of the ram 15 (a portion around the receiving portion 15b) are shifted upward, thereby correcting the amount of displacement of the front end of the ram 15 and also correcting the inclination thereof.

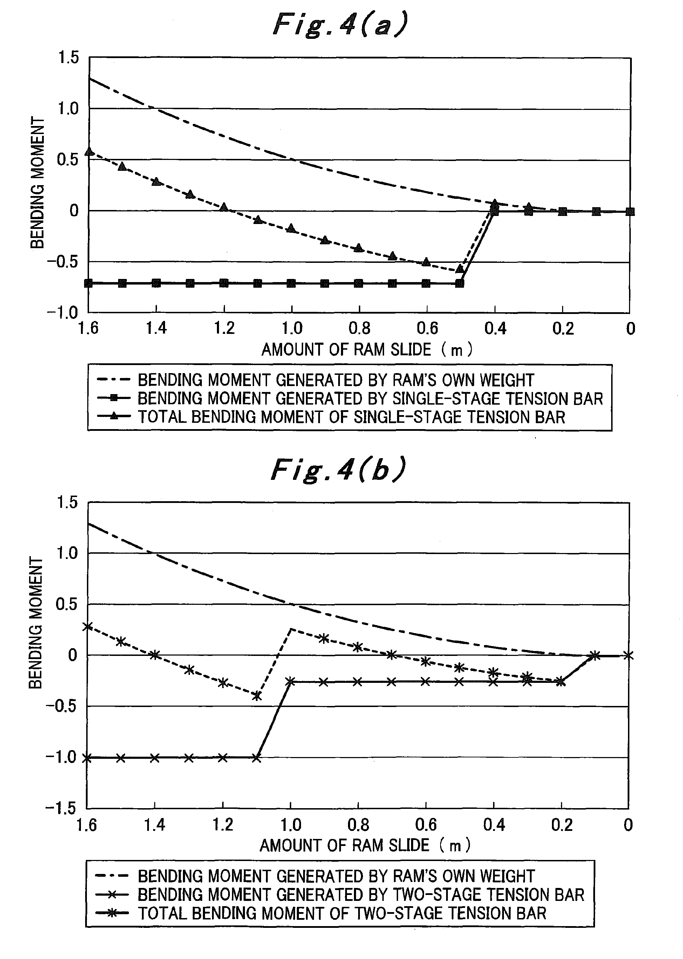

Now, referring to bending moment diagrams shown in Parts (a) and (b) of Fig. 4, description will be given of why the two-stage tension bar 20 in this embodiment can also correct the inclination of the front end of the ram 15. Here, a conventional tension bar will be referred to as a single-stage tension bar in the description. Moreover, since Fig. 9 mentioned earlier has already described that the amount of displacement of the front end of the ram 15 can be corrected, that description is omitted here.

Deflection due to the ram's own weight occurs because of a bending moment generated by a uniform load, and the bending moment generated by the ram's own weight defines a quadratic curve as shown in graphs of dashed lines in Parts (a) and (b) of Fig. 4. On the other hand, the force to be added by the pulling force of the tension bar is a moment and is constant. For example, the bending moment by the single-stage tension bar is shown as a graph of a solid line in Part (a) of Fig. 4, while the bending moment by the two-stage tension bar is shown as a graph of a solid line in Part (b) of Fig. 4. Here, the pulling force of each tension bar is set at such a level that the amount of displacement of the front end of the ram may be made 0.

For the ram deflection, in order to correct not only the amount of displacement of the front end of the ram but also the inclination thereof, the sum of the bending moment of the ram generated at the front end of the ram due to the ram' s own weight and the bending moment at the front end of the ram by the pulling force of the tension bar (hereinafter, simply referred to as "the sum of the bending moments") should be made close to "0." In the case of the single-stage tension bar, a bending moment diagram as shown by a graph of a dotted line in Part (a) of Fig. 4 is obtained as a result of exerting the bending moment, which is generated by the single-stage tension bar, on the bending moment, which is generated by the ram's own weight. It is difficult to make the sum of the bending moments close to "0" at the front end of the ram (a point where the amount of ram slide is 1.6 m in Part (a) of Fig. 4).

In this respect, in this embodiment, the tension bar is configured as the two-stage type to make the sum of the bending moments close to "0" at the front end of the ram. In the case of the two-stage tension bar, a bending moment diagram as shown by a graph of a dotted line in Part (b) of Fig. 4 is obtained as a result of exerting the bending moment, which is generated by the two-stage tension bar, on the bending moment, which is generated by the ram's own weight. The sum of the bending moments is made close to "0" at the front end of the ram (a point where the amount of ram slide is 1.6 m in Part (b) of Fig. 4), as compared to the single-stage tension bar shown in Part (a) of Fig. 4. From this fact, configuring the tension bar as the two-stage type can make the sum of the bending moments close to "0" at the front end of the ram. Accordingly, for the ram deflection, not only the amount of displacement of the front end of the ram but also the inclination thereof can be corrected. Note that the tension bar may be configured as a more-than-two multiple-stage type (three-stage type, for example), in which case the degree of freedom in correction is further increased, and thereby the sum of the bending moments can be made even closer to "0" at the front end of the ram.

On the assumption of the above-described principle, in the two-stage tension bar 20, the position, in the horizontal direction H, of the second tension bar 22 disposed inside is set as follows.

Specifically, the position, in the horizontal direction H, of the second tension bar 22 disposed inside, i.e. the position, in the horizontal direction H, of the pulling portion 22a of the second tension bar 22 should be disposed such that the sum of the bending moments at the front end of the ram 15 may be close to "0" as explained above. Although the bending moment diagrams shown in Parts (a) and (b) of Fig. 4 correspond to a case where no attachment is mounted to the ram 15, the same applies to a case where an attachment is mounted.

Thus, the position, in the horizontal direction H, of the pulling portion 22a of the second tension bar 22 is found as follows. A bending moment diagram as shown in Part (b) of Fig. 4 is calculated from the amount of feeding of the ram 15, the weight of an attachment to be mounted, the rigidity of the ram 15, the pulling force F1 of the first tension bar 21, and the pulling force F2 of the second tension bar 22. Then, a position which makes the sum of the bending moments at the front end of the ram 15 close to "0" to minimize the amount of displacement and inclination of the front end of the ram is found within ranges in which the pulling forces F1 and F2 can be changed. Then, the pulling portion 22a of the second tension bar 22 is provided at the position thus found. The same applies also to a tension bar of a more-than-two multiple-stage type.

Moreover, the position, in the top-bottom direction, of the two-stage tension bar 20 disposed in the ram 15 is disposed as follows.

The two-stage tension bar 20 in this embodiment is for performing deflection correction by applying a bending moment to the ram 15, as in the case of the conventional single-stage tension bar. To describe this with reference to Fig. 2 by taking the first tension bar 21 as an example, given that that M is a bending moment and that a is the distance from the flexural center of the ram 15 to the center line of the first tension bar 21, then the bending moment M generated by the pulling force F1 can be expressed by the equation below.

The above equation shows that the pulling force F1 should be increased or the distance a should be increased in order to maximize the bending moment M. Thus, the same pulling force F1 can generate a larger bending moment M if the distance a, i.e. the disposed position of the first tension bar 21 is disposed as far as possible from the flexural center. For this reason, the two-stage tension bar 20 in this embodiment is desirably disposed at a position near the upper surface of the ram 15.

Note that in principle, a bar of a two-stage type disposed below the center line of the ram and configured to generate pushing forces (hereinafter, referred to as a compression bar) may be used in place of the tension bar of the two-stage type disposed above the center line of the ram. The ram may be pushed upward by bending moments generated by a first pushing force and a second pushing force of a first compression bar and a second compression bar to correct the displacement and inclination of the front end of the ram. In this case, however, a compressing force is exerted on the compression bar itself, and therefore buckling of the compression bar itself needs to be prevented, requiring the compression bar to be thick. For this reason, if the ram is desired to be compact, it is desirable to use the two-stage tension bar disposed in an upper portion of the ram.

Further, as a modification, multiple tension bars of the two-stage type disposed above the center line of the ram may be provided. Alternatively, in place of tension bars of the two-stage type disposed coaxially, two independent tension bars differing in length may be disposed above the center line of the ram. Likewise, multiple compression bars of the two-stage type disposed below the center line of the ram may be provided. Alternatively, in place of compression bars of the two-stage type disposed coaxially, two independent compression bars differing in length may be disposed below the center line of the ram. Furthermore, the above-described tension bar and compression bar (both including the two-stage type and the independent type) may be combined.

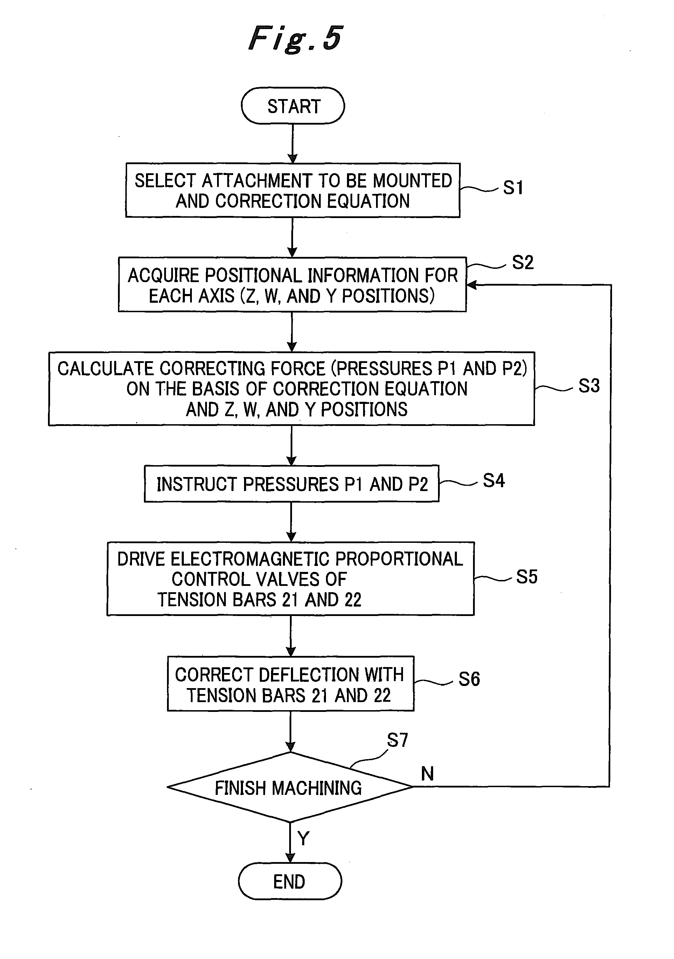

Next, a method of correcting the deflection of the ram 15 using the two-stage tension bar 20 in this embodiment will be described with reference to Fig. 5. Note that the following control is performed by a control device included in the horizontal machine tool 10.

First, an attachment to be mounted to the ram 15 is selected, and a correction equation corresponding to the attachment is selected as well (step S1).

Positional information on the ram 15 on each axis (Z, W, and Y positions) is acquired (step S2).

Based on the selected correction equation and the acquired positional information (Z, W, and Y positions), a correcting force $F_{ij}$ which minimizes the amount of displacement and inclination of the front end of the ram 15 is calculated and then converted into the pressures P1 and P2 to be applied to the first tension bar 21 and the second tension bar 2.

Note that the correcting force $F_{ij}$ mentioned above is defined as below for each tension bar and each attachment. Moreover, a function f below is determined by performing measurement with an actual machine.

$$F_{ij} = f_{ij} \ (y, \ z, \ w)$$

i: tension bar number (i = 1, 2 in the case of this embodiment)
j: attachment number

**[0047]** To describe this with reference to Figs. 2 and 3, for example, the correcting force $F_{ij}$ is the pulling forces F1 and F2; then, the oil pressures in the oil chambers 24 and 25 that are necessary to apply the correcting force $F_{ij}$ to the receiving portions 15a and 15b should be converted as the pressures P1 and P2. Moreover, for the function f, a relational expression cannot be uniquely found due to a series of factors (1) to (4) given below, and therefore the function f is determined by measuring actual values with the actual machine. Accordingly, in finding the pressures P1 and P2, the pressures P1 and P2 are found with the below conditions (1) to (4) taken into consideration.

(1) Deflection by the ram's own weight due to Z-, W-, and Y-axis movements
(2) Deflection of the ram due to the presence or absence of an attachment and the type of the attachment
(3) Leaning of the whole machine tool due to combined factors of (1) and (2) listed above
(4) Deformation of the machine tool due to a temperature change

In this process, the pressures P1 and P2 minimizing the inclination of the front end of the ram 15 should be found by calculating bending movements as shown in Part (b) of Fig. 4 together with the selected correction equation, the acquired positional information (Z, W, and Y positions), and the like. In this calculation, the ranges of the pressures P1 and P2 are found with respect to an allowable range of inclination, and the ranges of the pressures P1 and P2 are separately found with respect to an allowable range of the amount of displacement. Then, pressures P1 and P2 should be found which minimize the amount of displacement and inclination of the front end of the ram 15 within regions where the ranges of the pressures P1 and P2 with respect to the allowable range of inclination overlap the ranges of the pressures P1 and P2 with respect to the allowable range of the amount of displacement.

The pressures P1 and P2 thus found are instructed by the control device included in the horizontal machine tool 10 (step S4), and the electromagnetic proportional control valves of the first tension bar 21 and second tension bar 22 are driven in such a way as to supply hydraulic pressures of the pressures P1 and P2, respectively (step S5).

By the hydraulic pressures of the pressures P1 and P2 supplied to the first tension bar 21 and the second tension bar 22, respectively, the deflection of the ram 15 is corrected, whereby the amount of displacement and inclination of the front end of the ram 15 are controlled to be minimized (step S6).

In the control from step S2 to step S6 described above, the position of the ram 15 is fed back until the machining is finished, so that the pressures P1 and P2 are calculated and controlled in real time, and the pressures P1 and P2 are changed based on the amount of ram slide as a matter of course (step S7).

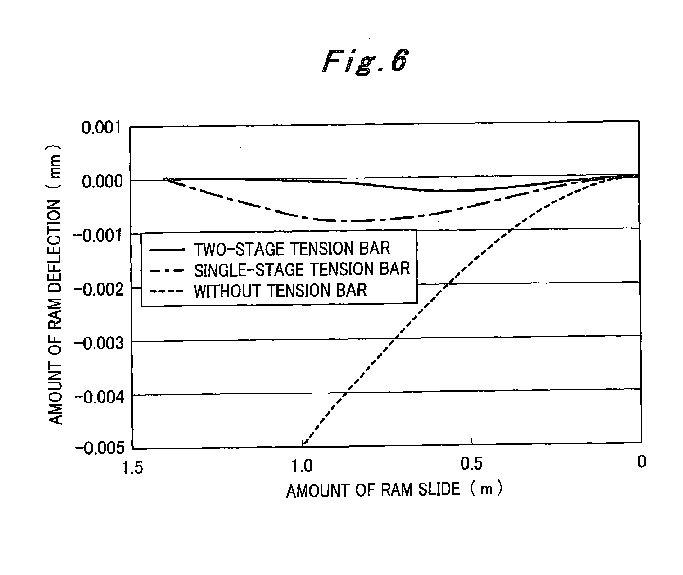

Fig. 6 shows a graph of the amount of ram deflection obtained as a result of the control described above. Note that a case with no tension bar and a case with a single-stage tension bar are also shown for comparison. As can be seen from the graphs in Fig. 6, the amount of displacement due to the deflection as well as the inclination thereof are corrected simultaneously at the front end of the ram by using the two-stage tension bar of this embodiment to pull in the ram at two spots.

This makes it possible to improve the straightness and perpendicularity of the ram and also to reduce variations in the displacement and inclination of the front end of the ram caused by attachments differing in mass. Accordingly, a high machining accuracy can be achieved.

INDUSTRIAL APPLICABILITY

The present invention is suitable for horizontal machine tools such as horizontal boring machines.

**Claims**

1. A ram deflection correction device for correcting deflection of a ram of a machine tool, the ram being supported on a saddle movably in a horizontal direction, the ram deflection correction device comprising:

   a first tension bar provided along the horizontal direction above a center line of the ram and configured to apply a first pulling force which inwardly pulls a front end of the ram; and

   a second tension bar provided along the horizontal direction above the center line of the ram and configured to apply a second pulling force which inwardly pulls a position inward of a front end of the first tension bar.

2. The ram deflection correction device according to claim 1, wherein the first tension bar and the second tension bar are disposed at positions apart from and above a flexural center of the ram.

3. The ram deflection correction device according to claim 1 or 2, wherein the first tension bar and the second tension bar are disposed coaxially with each other.

4. A ram deflection correction device for correcting deflection of a ram of a machine tool, the ram being supported on a saddle movably in a horizontal direction, the ram deflection correction device comprising:

   a first compression bar provided along the horizontal direction below a center line of the ram and configured to apply a first pushing force which outwardly pushes a front end of the ram; and

   a second compression bar provided along the horizontal direction below the center line of the ram and configured to apply a second pushing force which outwardly pushes a position inward of a front end of the first tension bar.

5. The ram deflection correction device according to claim 4, wherein the first compression bar and the second compression bar are disposed at positions apart from and below a flexural center of the ram.

6. The ram deflection correction device according to claim 4 or 5, wherein the first compression bar and the second compression bar are disposed coaxially with each other.

7. A ram deflection correction method using the ram deflection correction device according to any one of claims 1 to 3, comprising:

   finding the first pulling force and the second pulling force which cause an amount of displacement of the front end of the ram to be 0 and also cause a sum of a bending moment of the ram generated by an own weight of the ram and a bending moment generated by the first pulling force and the second pulling force to be 0 at the front end of the ram; and

   applying the first pulling force and the second pulling force thus found through the first tension bar and the second tension bar, respectively.

**8.** A ram deflection correction method using the ram deflection correction device according to any one of claims 4 to 6, comprising:

> finding the first pushing force and the second pushing force which cause an amount of displacement of the front end of the ram to be 0 and also cause a sum of a bending moment of the ram generated by an own weight of the ram and a bending moment generated by the first pushing force and the second pushing force to be 0 at the front end of the ram; and
> applying the first pushing force and the second pushing force thus found through the first compression bar and the second compression bar, respectively.

**9.** The ram deflection correction method according to claim 7 or 8, wherein in a case where an attachment is mounted to the front end of the ram, a weight of the attachment is added to the weight of the ram, and then the bending moment of the ram is found.

# Fig.1

# Fig.2

# Fig.3

## Fig.4(a)

BENDING MOMENT / AMOUNT OF RAM SLIDE ( m )

--- BENDING MOMENT GENERATED BY RAM'S OWN WEIGHT
—■— BENDING MOMENT GENERATED BY SINGLE-STAGE TENSION BAR
—▲— TOTAL BENDING MOMENT OF SINGLE-STAGE TENSION BAR

## Fig.4(b)

BENDING MOMENT / AMOUNT OF RAM SLIDE ( m )

--- BENDING MOMENT GENERATED BY RAM'S OWN WEIGHT
—✕— BENDING MOMENT GENERATED BY TWO-STAGE TENSION BAR
—✱— TOTAL BENDING MOMENT OF TWO-STAGE TENSION BAR

# Fig.5

```
                    ┌──────────┐
                    │  START   │
                    └────┬─────┘
                         │
                         ▼
         ┌───────────────────────────────────┐
         │  SELECT ATTACHMENT TO BE MOUNTED   │─── S1
         │     AND CORRECTION EQUATION        │
         └──────────────┬────────────────────┘
                        │
                        ▼
         ┌───────────────────────────────────┐
         │  ACQUIRE POSITIONAL INFORMATION FOR│─── S2
         │   EACH AXIS (Z, W, AND Y POSITIONS)│◄──────┐
         └──────────────┬────────────────────┘       │
                        │                             │
                        ▼                             │
    ┌──────────────────────────────────────────┐     │
    │ CALCULATE CORRECTING FORCE (PRESSURES P1 AND P2)│── S3
    │    ON THE BASIS OF CORRECTION EQUATION    │     │
    │        AND Z, W, AND Y POSITIONS          │     │
    └─────────────────┬────────────────────────┘     │
                      │                               │
                      ▼                               │
         ┌───────────────────────────────┐            │
         │  INSTRUCT PRESSURES P1 AND P2  │─── S4      │
         └──────────────┬────────────────┘            │
                        │                             │
                        ▼                             │
       ┌─────────────────────────────────────┐        │
       │  DRIVE ELECTROMAGNETIC PROPORTIONAL  │── S5    │
       │          CONTROL VALVES OF           │        │
       │       TENSION BARS 21 AND 22         │        │
       └────────────────┬────────────────────┘        │
                        │                             │
                        ▼                             │
          ┌──────────────────────────┐                │
          │ CORRECT DEFLECTION WITH   │── S6           │
          │  TENSION BARS 21 AND 22   │                │
          └────────────┬─────────────┘                │
                       │                    S7         │
                       ▼                               │
                  ╱──────────────╲      N              │
                 ╱  FINISH MACHINING ╲─────────────────┘
                  ╲──────────────╱
                       │ Y
                       ▼
                 ┌──────────┐
                 │   END    │
                 └──────────┘
```

## *Fig.6*

# Fig.7

## *Fig.8*

## *Fig.9*

## INTERNATIONAL SEARCH REPORT

| | International application No. |
| --- | --- |
| | PCT/JP2010/066477 |

**A. CLASSIFICATION OF SUBJECT MATTER**
*B23Q1/72*(2006.01)i, *B23Q1/01*(2006.01)i

According to International Patent Classification (IPC) or to both national classification and IPC

**B. FIELDS SEARCHED**

Minimum documentation searched (classification system followed by classification symbols)
B23Q1/72, B23Q1/01

Documentation searched other than minimum documentation to the extent that such documents are included in the fields searched
Jitsuyo Shinan Koho          1922-1996     Jitsuyo Shinan Toroku Koho    1996-2010
Kokai Jitsuyo Shinan Koho    1971-2010     Toroku Jitsuyo Shinan Koho    1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 62-74550 A  (Toshiba Machine Co., Ltd.),<br>06 April 1987 (06.04.1987),<br>claims; page 3, upper left column, lines 10 to 15; upper right column, lines 5 to 14; lower right column, lines 3 to 13; page 4, upper right column, lines 2 to 6; all drawings<br>(Family: none) | 1,2,4,5,7-9<br>3,6 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>04 November, 2010 (04.11.10) | Date of mailing of the international search report<br>16 November, 2010 (16.11.10) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/066477 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 51-103386 A  (Hure S.A.),<br>11 September 1976 (11.09.1976),<br>page 1, lower right column, line 15 to page 2,<br>upper left column, line 1; page 2, upper left<br>column, lines 11 to 13; upper right column,<br>lines 4 to 17; lower left column, lines 4 to<br>10; lower left column, line 18 to lower right<br>column, line 3; fig. 1, 2, 9<br>& US 4117762 A          & GB 1519737 A<br>& DE 2603900 A1          & FR 2299117 A1 | 1,2,4,5,7-9<br>3,6 |

Form PCT/ISA/210 (continuation of second sheet) (July 2009)

**REFERENCES CITED IN THE DESCRIPTION**

**Patent documents cited in the description**

- JP HEI03064264 B